# EUROPEAN PATENT APPLICATION

(11) **EP 1 282 047 A2**
(43) Date of publication of application: **05.02.2003**
(21) Application number: 02016380.4
(22) Date of filing: 26.07.2002
(51) Int. Cl.: G06F 17/30

(54) **System and method for controlling a hyperlink activation per the intent of a web page creator**

(30) Priority: 30.07.2001 US 918379
(71) Applicant: ALCATEL, 75008 Paris (FR)
(72) Inventor: Kubala, Robert J., Plano, TX 75023 (US)
(74) Representative: Dreiss, Fuhlendorf, Steimle & Becker

(57) **Abstract**

A system, a web host site and method are described that are capable of enabling a creator of a web page to control the activation of a hyperlink to another web page by screening a user for comprehension of certain information before allowing that user to activate a hyperlink to another web page. Basically, the method includes the steps of creating a web page that includes a permission dialog box and enabling a user and personal computer to fetch the created web page. The personal computer then displays the web page in a manner such that if the user selects a hypertext link on the web page then the personal computer displays the permission dialog box. The permission dialog box screens the user to make sure that the user comprehends information displayed on the web page or in the permission dialog box before retrieving a target web page associated with the selected hypertext link.

## Description

### Field of the Invention

The present invention relates in general to the Internet field and, in particular, to a system and method capable of enabling a creator of a web page to screen a user of the web page before allowing that user to hyperlink to another web page.

### Description of Related Art

Today in the Internet field, it is common for a creator of a web page to display a password dialog box or some other type of dialog box (e.g., warning dialog box) that is used to screen a user before allowing that user to access their web page. For instance, on-line casinos screen a user by requiring the user to read and accept a disclaimer in a warning dialog box before allowing that user to access the casino web page. However on the other hand, to date there is no effective way a creator of a web page can screen a user of their web page to make sure that the user comprehends certain information before allowing them to hyperlink to another web page. Typically, the user interacting with a web page can hyperlink to another web page simply by selecting a hypertext link which is usually highlighted in one way or another such as being underlined or colored to contrast with other text on the web page. The only known way a creator of a web page can hope to screen a user before allowing that user to hyperlink to another web page is to place the relevant information in the visual proximity of the hypertext link and hope that the user would see, read and comprehend the relevant information. Of course, the placement of relevant information near a hypertext link with the hope that a user would see, read and comprehend the relevant information is not an effective way to make sure that the user comprehends the relevant information. Accordingly, there is and has been a need for a system and method that can effectively enable a creator of a web page to screen a user of the web page before allowing that user to hyperlink to another web page. This need and other needs are addressed by the system, the web host site and the method of the present invention.

### BRIEF DESCRIPTION OF THE INVENTION

The present invention includes a system, a web host site and method that are capable of enabling a creator of a web page to screen a user of the web page before allowing that user to hyperlink to another web page. Basically, the method includes the steps of composing a web page that includes a permission dialog box and enabling a user interacting with a personal computer to fetch the web page. The personal computer displays the web page and if the user selects a hypertext link on the web page then the personal computer displays the permission dialog box. The permission dialog box effectively screens the user to make sure that the user comprehends information displayed in the permission dialog box before enabling the personal computer to retrieve a target web page associated with the selected hypertext link.

### Brief Description of the Drawings

A more complete understanding of the present invention may be had by reference to the following detailed description when taken in conjunction with the accompanying drawings wherein:
- FIGURE 1: is a block diagram illustrating the basic components of a system in accordance with the present invention;
- FIGURE 2: is a flowchart illustrating the basic steps of a preferred method in accordance with the present invention;
- FIGURE 3: is a block diagram illustrating exemplary web pages and an exemplary permission dialog box that can be displayed on a personal computer of the system shown in FIGURE 1;
- FIGURE 4: is a block diagram illustrating another exemplary web page and another exemplary permission dialog box that can be displayed on the personal computer of the system shown in FIGURE 1;

### DETAILED DESCRIPTION OF THE DRAWINGS

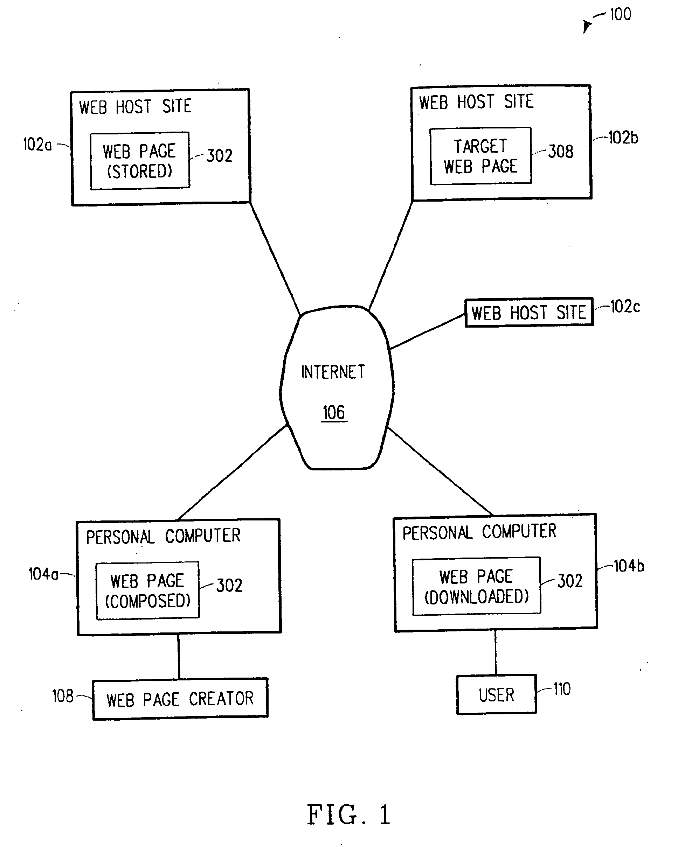

Referring to FIGURES 1-4, there are disclosed a preferred system 100 and preferred method 200 of the present invention that can effectively enable a creator of a web page to screen a user of the web page before allowing that user to hyperlink to another web page. Although only one creator of a web page and one user of the web page are described herein, it should be understood that any number of creators and users can use the present invention. Accordingly, the system 100 and method 200 should not be construed in a limited manner.

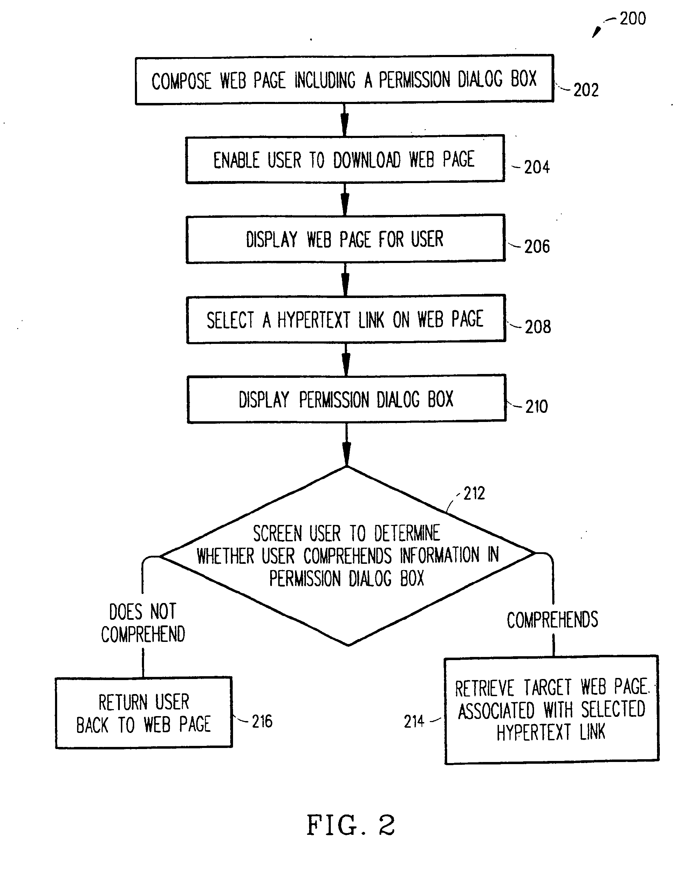

Referring to FIGURES 1 and 2, there are respectively illustrated a block diagram of the preferred system 100 and a flowchart of the preferred method 200 in accordance with the present invention. As shown in FIGURE 1, the system 100 includes multiple web host sites 102a, 102b and 102c (only three shown) and multiple personal computers 104a, 104b (only two shown) all of which can interface with the Internet 106. Each web host site 102a, 102b and 102c is basically a facility that has racks of personal computers (e.g., processors) and databases which contain a large number of web pages that can be accessed over the Internet 106 using high speed communications links. The personal computers 104a and 104b can be any type of electronic device including, for example, a mobile phone or personal digital assistant.

Certain details associated with the web host sites 102a, 102b and 102c, the personal computers 104a and 104b and the Internet 106 are known in the industry and as such need not be described herein. Therefore, for clarity, the description provided below in relation to the web host sites 102a, 102b and 102c, the personal computers 104a, and 104b and the Internet 106 omits some components not necessary to understand the invention.

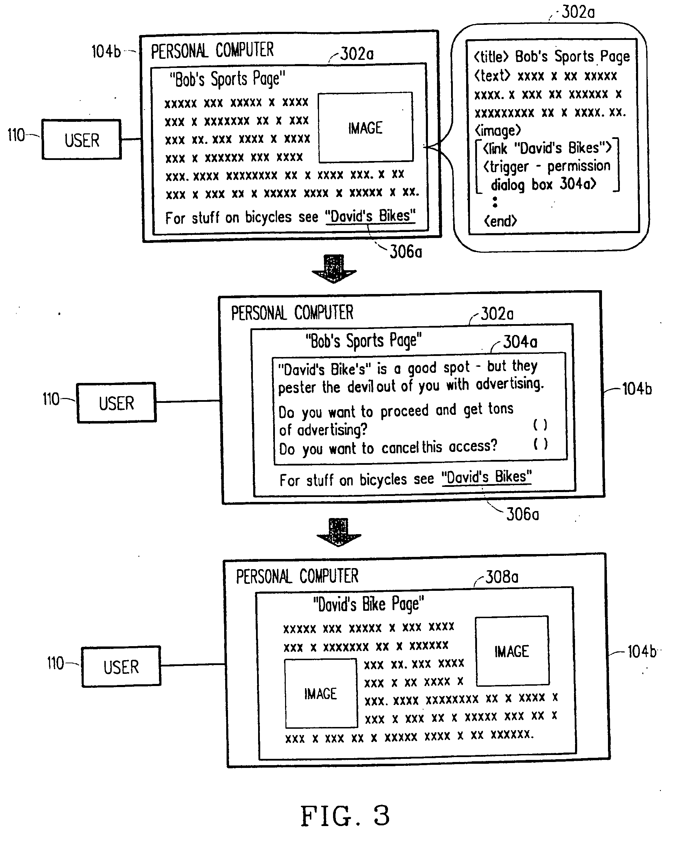

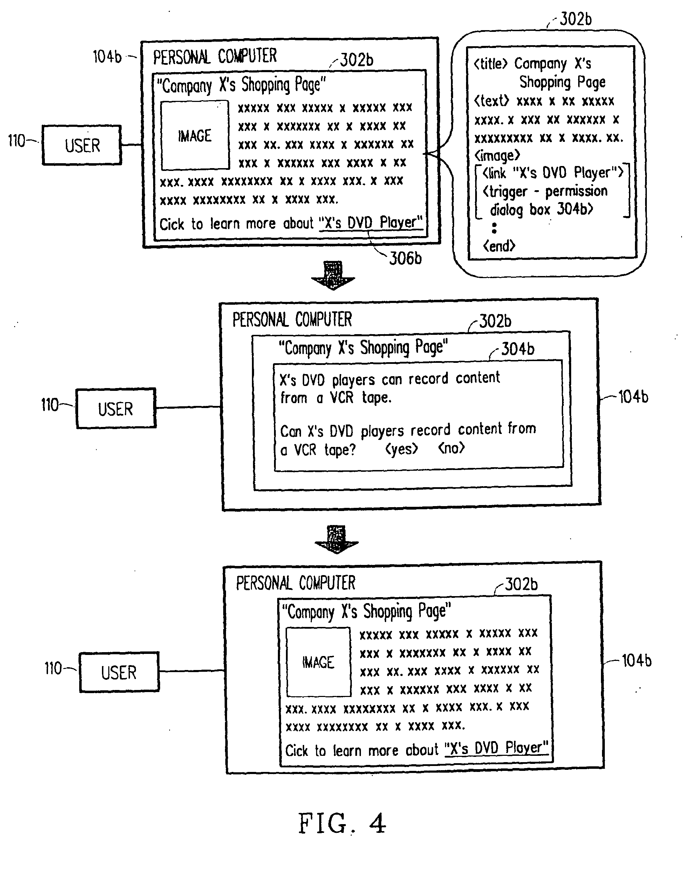

In the preferred embodiment, a creator 108 interacts with the personal computer 104a to compose (step 202) a web page 302 that includes one or more permission dialog boxes 304 (see FIGURES 3 and 4). The creator 108 then downloads the web page 302 to the web host site 102a via the Internet 106. The web host site 102a enables (step 204) a user 110 interacting with the personal computer 104b and Internet 106 to download the web page 302. Next, the personal computer 104b displays (step 206) the web page 302 for the user 110. At this point, the displayed web page 302 includes text, images and hypertext links 306 (see FIGURES 3-4). Hypertext links 306 are generally text that is highlighted by an underline and/or colored to contrast with other text on the web page 302. However, hypertext links 306 can also be a variety of objects on the web page 302 including small images, icons, buttons etc...

Assuming the user 110 selects (step 208) one of the hypertext links 306 on the web page 302, then the personal computer 104b displays (step 210) a permission dialog box 304 (see FIGURES 3-4). The permission dialog box 304 effectively screens (step 212) the user 110 to determine whether the user 110 comprehends the information displayed in the permission dialog box 304. If the user 110 comprehends the information displayed in the permission dialog box 304, then the personal computer 104b is allowed to retrieve (step 214) a target web page 308. The target page 308 associated with the selected hypertext link 306 can be stored in anyone of the web host sites 102a, 102b and 102c. Otherwise, if the user 110 fails to comprehend the information displayed in the permission dialog box 304, then personal computer 104b returns (step 216) the user 110 back to the web page 302.

As mentioned above, the creator 108 can program the permission dialog box 304 to screen the user 110 so that they can make sure that the user 110 comprehends the information displayed in the permission dialog box 304 before enabling the user 110 to retrieve the target web page 308. The type of information, which the creator 108 would like to ensure that the user 110 comprehends, is completely open to the imagination and needs of the creator 108. Listed below are some examples of the type of information that the creator 108 may want to ensure that the user 110 comprehends:
- An advertisement.
- A caution about the content (e.g., pornography) on the hyperlink target web page 308.
- An advisement that the target web page 308 may subject the user 110 to some sort of monitoring.
- A notice that the target web page 308 requires special browser "plug-ins".
- A notice that the target web page 308 is available only on certain dates or times.
- A survey the results of which can be forwarded to the creator 108 or a third party.
- A test of comprehension of a training topic (e.g., progression to next training step enabled only if user provides a correct answer.
- Etc...

A web page 302 that is programmed to display a permission dialog box 304 whenever a user 110 selects a hyperlink text 306 instead of automatically fetching a target web page 308 is a marked improvement over the state-of-the-art. Because with the present invention, the creator 108 of the web page 302 can control whether or not a hyperlink is activated to retrieve a target page 308 associated with a hypertext link 306. Whereas in the past, the creator of a web page had no control over the activation of a hyperlink in that when a user selected a hypertext link on the web page the browser would automatically fetch the target web page. Several examples of different types of permission dialog boxes 304 and different features of the present invention are described below with respect to FIGURES 3-4.

Referring to FIGURE 3, there is a block diagram illustrating in greater detail the user 110, exemplary web pages 302a and 308a and an exemplary permission dialog box 304a that are used to help describe some of the features of the present invention. In this example, it is assumed that the user 110 has already interacted with the personal computer 104b to download the web page 302a from the web host site 102a. The personal computer 104b displays the web page 302a which is shown here to be associated with "Bob's Sport Page" (see top drawing).

The web page 302a (e.g., "Bob's Sport Page") like other traditional web pages includes text, images and hypertext links 306a (only one shown). However, the web page 302a is different from traditional web pages in that the creator 108 of the web page 302a also programmed a permission dialog box 304a to be displayed if the user 110 selects the hyperlink text 306a. In practice, the creator 108 could use HTML (hypertext traditional markup language) or a similar editor to compose the web page 302a by opening and closing tags such as "title", "body", "text", "image" and "hyperlink" (see exploded view of web page 302a). At the "hyperlink" tag, the creator 108 would then use a script language (e.g., Java, PHP, Perl, NetObject™) to program and compose the permission dialog box 304a.

Again, how the creator 108 composes the permission dialog box 304a is completely open to the imagination and needs of the creator 108. In this example, the permission dialog box 304a and the text therein are composed in a way to make sure the user 110 understands that there is a caution about the target web page 308a. As shown in the middle drawing, the permission dialog box 304a displayed over the original web page 302a includes a brief warning about the high degree of advertising that comes along with visiting the target page 308a. In this example, the target page 308a is associated with "David's Bike Page". At this point, the user 110 must select whether they want to proceed to the target web page 308a (e.g., "David's Bike Page") or whether they want to cancel this access and return to web page 302a (e.g., "Bob's Sport Page"). It should be noted that the "test" in the permission dialog box 304a looks like a simple choice, but in fact it can only be navigated by the user 110 if they comprehend the message.

As shown in the bottom drawing, the user 110 in this example selected to proceed to the target web page 308a (e.g., "David's Bike Page"). Again, the present invention is a marked improvement over the state-of-the-art, because the creator 108 of the web page 302 can use the permission dialog box 304a to effectively screen the user 110 and to make sure that the user 110 comprehends the information displayed in the permission dialog box 304a before enabling the browser in the personal computer 104b to retrieve a target web page 308a. Whereas in the past, the creator of a web page had no control over the activation of a hyperlink in that when a user selected a hypertext link on the web page the personal computer would automatically fetch the target web page.

Referring to FIGURE 4, there is a block diagram illustrating in greater detail the user 110, another exemplary web page 302b and an another exemplary permission dialog box 304b that are used to help describe some of the features of the present invention. In this example, it is assumed that the user 110 has already interacted with the personal computer 104b to download the web page 302b from the web host site 102a. The personal computer 104b displays the web page 302b which is shown here to be associated with "Company X's Shopping Page".

The web page 302b (e.g., "Company X's Shopping Page") like other traditional web pages includes text, images and hypertext links 306b (only one shown). However, the web page 302b is different from traditional web pages in that the creator 108 of the web page 302b also programmed a permission dialog box 304b to be displayed if the user 110 selects the hyperlink text 306b. Like above, the creator 108 could use HTML (hypertext traditional markup language) or a similar editor to compose the web page 302b by opening and closing tags such as "title", "body", "text", "image" and "hyperlink" (see exploded view of web page 302b). At the "hyperlink" tag, the creator 108 would then use a script language (e.g., Java, PHP, Perl, NetObject™) to program and compose the permission dialog box 304b.

Again, how the creator 108 composes the permission dialog box 304b is completely open to the imagination and needs of the creator 108. In this example, the permission dialog box 304b and the text therein are composed in a manner to make sure the user 110 understands something about an advertisement. The advertisement can be something that was displayed on the web page 302b or something that is entirely new to the user 110. As shown in the middle drawing, the permission dialog box 304b displayed over the original web page 302b includes a brief statement about a product and a test for the user to determine whether the user comprehends a specific detail about the product. In particular, the user 110 must read a brief statement about a product and then select a correct answer to a question about the product. It should be noted that the "test" in the permission dialog box 304b could be a very simple test which the creator 108 can use to make sure that the user 110 has at least some knowledge about a certain product.

As shown in the bottom drawing, the user 110 in this example failed the test and was returned to web page 302b (e.g., "Company X's Shopping Page"). If the user 110 desires they can select the hypertext link 306b once more to take the text again and hopefully pass so the user 110 can have access to the target web page 308b. Once more, the present invention is a marked improvement over the state-of-the-art, because the creator 108 of the web page 302 can use the permission dialog box 304b to effectively screen the user 110 and to make sure that the user 110 comprehends the information displayed in the permission dialog box 304b before enabling the browser in the personal computer 104b to retrieve a target web page 308b. Whereas in the past, the creator of a web page had no control over the activation of a hyperlink in that when a user selected a hypertext link on the web page the personal computer would automatically fetch the target web page.

It should be understood that the two examples described above are just two of many possible ways a creator can compose and use a permission dialog box 304. Once again, listed below are some examples of the type of information that the creator 108 may want to ensure that the user 110 comprehends:
- An advertisement.
- A caution about the content (e.g., pornography) on the hyperlink target web page 308.
- An advisement that the target web page 308 may subject the user 110 to some sort of monitoring.
- A notice that the target web page 308 requires special browser "plug-ins".
- A notice that the target web page 308 is available only on certain dates or times.
- A survey the results of which can be forwarded to the creator 108 or a third party.
- A test of comprehension of a training topic (e.g., progression to next training step enabled only if user provides a correct answer.
- Etc...

It should also be understood that a single web page can have may hypertext links each of which when selected could trigger a different permission dialog box. Moreover, it should be noted that not all hypertext links need to trigger a permission dialog box instead some hypertext links when selected can simply fetch the associated target web page.

Although several embodiments of the present invention has been illustrated in the accompanying Drawings and described in the foregoing Detailed Description, it should be understood that the invention is not limited to the embodiments disclosed, but is capable of numerous rearrangements, modifications and substitutions without departing from the spirit of the invention as set forth and defined by the following claims.

## Claims

1. A method for controlling the activation of a hyperlink on a web page, said method comprising the steps of:
composing the web page that includes a permission dialog box;
enabling a user to fetch the web page and display the web page at a personal computer and if the user selects a hypertext link on the web page then the personal computer displays the permission dialog box which screens the user to make sure that the user comprehends information displayed in the permission dialog box before the personal computer retrieves a target web page associated with the selected hypertext link.

2. The method of Claim 1, wherein said personal computer returns the user back to the web page if the user fails to comprehend the information displayed in the permission dialog box.

3. The method of Claim 1, wherein said permission dialog box may provide a test to the user to determine whether the user comprehends the information displayed in the permission dialog box.

4. The method of Claim 1, wherein said information to be comprehended by the user is an advertisement.

5. The method of Claim 1, wherein said information to be comprehended by the user is a caution about the target web page.

6. The method of Claim 1, wherein said information to be comprehended by the user is an advisement that the target web page may subject the user to some sort of monitoring.

7. The method of Claim 1, wherein said information to be comprehended by the user is a notice that the target web page requires special browser plug-ins.

8. The method of Claim 1, wherein said information to be comprehended by the user is a notice that the target web page is available only on certain dates or times.

9. The method of Claim 1, wherein said information to be comprehended by the user is a survey the results of which can be forwarded to the creator or a third party.

10. The method of Claim 1, wherein said hypertext link can be highlighted text, underlined text, an image, an icon or a button.

11. The method of Claim 1, wherein said personal computer can by any electronic device including a mobile phone or personal digital assistant.

12. A web host site comprising:
a database capable of storing a web page including a permission dialog box both of which were composed by a web page creator;
a processor capable of enabling a user to download the web page into a personal computer that displays the web page and also displays the permission dialog box when the user selects a hypertext link on the web page, wherein the permission dialog box screens the user to make sure that the user comprehends information displayed in the permission dialog box before said personal computer retrieves a target web page associated with the selected hypertext link.

13. The web host site of Claim 12, wherein said personal computer returns the user back to the web page if the user fails to comprehend the information displayed in the permission dialog box.

14. The web host site of Claim 12, wherein said permission dialog box may provide a test to the user to determine whether the user comprehends the information displayed in the permission dialog box.

15. The web host site of Claim 12, wherein said information to be comprehended by the user is an advertisement.

16. The web host site of Claim 12, wherein said information to be comprehended by the user is a caution about the target web page.

17. The web host site of Claim 12, wherein said information to be comprehended by the user is an advisement that the target web page may subject the user to some sort of monitoring.

18. The web host site of Claim 12, wherein said information to be comprehended by the user is a notice that the target web page requires special browser plug-ins.

19. The web host site of Claim 12, wherein said information to be comprehended by the user is a notice that the target web page is available only on certain dates or times.

20. The web host site of Claim 12, wherein said information to be comprehended by the user is a survey the results of which can be forwarded to the creator or a third party.

21. The web host site of Claim 12, wherein said hypertext link can be highlighted text, underlined text, an image, an icon or a button.

22. The web host site of Claim 12, wherein said personal computer can by any electronic device including a mobile phone or personal digital assistant.

23. A method for screening a user of a web page, said method comprising the steps of:
ownloading the web page into an personal computer used by the user;
isplaying the web page on the personal computer;
electing a hypertext link on the displayed web page;
isplaying a permission dialog box associated with the selected hypertext link;
creening the user to determine if the user comprehends information displayed in the permission dialog box; and
etrieving the target web page associated with the selected hypertext link if the user comprehends the information displayed in the permission dialog box.

24. The method of Claim 23, further comprising the step of returning the user back to the web page if the user fails to comprehend the information displayed in the permission dialog box.

25. The method of Claim 23, wherein said permission dialog box may provide a test to the user to determine whether the user comprehends the information displayed in the permission dialog box.

26. The method of Claim 23, wherein said information to be comprehended by the user is an advertisement.

27. The method of Claim 23, wherein said information to be comprehended by the user is a caution about the target web page.

28. The method of Claim 23, wherein said information to be comprehended by the user is an advisement that the target web page may subject the user to some sort of monitoring.

29. The method of Claim 23, wherein said information to be comprehended by the user is a notice that the target web page requires special browser plug-ins.

30. The method of Claim 23, wherein said information to be comprehended by the user is a notice that the target web page is available only on certain dates or times.

31. The method of Claim 23, wherein said information to be comprehended by the user is a survey the results of which can be forwarded to the creator or a third party.

32. The method of Claim 23, wherein said hypertext link can be highlighted text, underlined text, an image, an icon or a button.

33. The method of Claim 23, wherein said personal computer can by any electronic device including a mobile phone or personal digital assistant.
